# EUROPÄISCHE PATENTSCHRIFT

(11) **EP 2 243 451 B1**
(45) Veröffentlichungstag und Bekanntmachung des Hinweises auf die Patenterteilung: **24.07.2013**
(21) Anmeldenummer: 10004158.1
(22) Anmeldetag: 20.04.2010
(51) Int. Cl.: A61G 5/04, B62K 5/00

(54) **Fahrzeugantrieb**
Vehicle drive
Entraînement de véhicule

(30) Priorität: 09.10.2009 DE 102009048995; 20.04.2009 DE 102009017838
(43) Veröffentlichungstag der Anmeldung: 27.10.2010
(73) Patentinhaber: Schmid, Egon, W-88605 Sauldorf/Krumbach (DE)
(72) Erfinder: Schmid, Egon, 88605 Sauldorf/Krumbach (DE); Richter, Alfred, 73230 Kirchheim Teck (DE)
(74) Vertreter: Weiss, Peter

(56) Entgegenhaltungen:
- EP-A1- 1 947 001
- EP-A1- 1 950 130
- EP-A2- 1 566 158
- WO-A1-00/04857
- US-A- 5 161 634
- US-A- 5 251 713

## Beschreibung

Die Erfindung betrifft einen Antrieb für ein Fahrzeug nach dem Oberbegriff des Anspruchs 1.

### STAND DER TECHNIK

Antriebe für Elektro-Krankenfahrstühle weisen eine elektrische Maschine auf, welche die Hinterachse antreibt. Die elektrische Maschine weist eine im Vergleich zur Gesamtmasse des Krankenfahrstuhls vergleichsweise grosse Masse auf und wird daher üblicherweise mittig des Krankenfahrstuhls, insbesondere mittig bezüglich der angetriebenen Achse angeordnet, um die Kippgefahr des Krankenfahrstuhls zu verringern. Auf der Seite der elektrischen Maschine, auf welcher die Abtriebswelle aus dem Gehäuse der elektrischen Maschine heraustritt, ist ein Getriebe angeordnet. Über das Getriebe steht die Abtriebswelle in Wirkverbindung mit der angetriebenen Achse. Die angetriebene Achse verfügt an ihren beiden Seiten jeweils über Räder, die so von der elektrischen Maschine angetrieben werden.

Problematisch in dem bekannten Stand der Technik ist die häufig mangelhafte Lagerung der Räder, wobei zu berücksichtigen ist, dass Krankenfahrstühle oder andere Personenbeförderungskleinfahrzeuge, beispielsweise vorgeschrieben durch gesetzliche Vorschriften, eine geringe Breite aufweisen. Dies erschwert eine dem Fahrkomfort dienende Einzelradaufhängung der angetriebenen Räder aufgrund Platzmangels.

Das Dokument EP 1 947 001 A1 offenbart ein Personenbeförderungskleinkraftfahrzeug mit Haltegriffen im Bereich beider Vorderräder, welche ein Hochheben des Personenkleinkraftfahrzeugs, beispielsweise auf Bürgersteige, erleichtern sollen.

Das Dokument US 5 161 634 A offenbart ein Elektrofahrzeug mit einer optimierten Geschwindigkeits- und Beschleunigungssteuerung. Das erfindungsgemässe Elektrofahrezeug soll sich, insbesondere am Steigungen, mit einer Geschwindigkeit bewegen, welche einem Betätigungsgrad eines Gashebels entspricht und soll zudem ein Höchstmaß an Betriebssicherheit gewährleisten.

### AUFGABE

Aufgabe der Erfindung ist es, einen Antrieb für ein Fahrzeug, insbesondere für einen Krankenfahrstuhl anzugeben, bei welchem die oben beschriebenen Probleme des Standes der Technik vermindert oder abgestellt sind, insbesondere ist es Aufgabe der Erfindung, einen entsprechenden Antrieb anzugeben, bei dem eine verbesserte Radaufhängung ermöglicht wird.

### LÖSUNG DER AUFGABE

Zur Lösung der Aufgabe wird ein Antrieb gemäss Anspruch 1 bereitgestellt. Die erfindungsgemässe Lösung ordnet einen Antriebsübertragungsbereich der angetriebenen Achse im wesentlichen mittig der Achse an. Auf diese Weise wird beidseitig des mittig angeordneten Antriebsübertragungsbereichs Platz für eine bessere Lagerung der Räder geschaffen. Der Antriebsübertragungsbereich der Achse bezeichnet dabei einen Bereich der Achse, in welchem das Antriebsdrehmoment auf die Achse übertragen wird. Dies kann über ein Zahnrad, über einen Riementrieb oder ähnliches geschehen. Vorzugsweise ist auch eine Baugruppe umfassend die elektrische Maschine und ein Getriebe mittig bezüglich der Achse angeordnet, d.h., dass der Schwerpunkt der Baugruppe vorzugsweise auf einer Ebene angeordnet ist, welche senkrecht zu der Achse steht und mittig bezüglich der Achse ist. Dabei bedeutet in Bezug auf die Anordnung des Antriebsübertragungsbereichs oder bezüglich der Anordnung der Baugruppe der Ausdruck "mittig der Achse" vorzugsweise einen Bereich, der die mittleren 20% der Gesamtlänge der Achse oder der Breite des Fahrzeugs umfasst, noch bevorzugter maximal 10% oder am bevorzugtsten 5%. Die mittig angeordnete Maschine bietet den Vorteil einer günstigen Lage des Schwerpunkts des Gesamtfahrzeugs.

Die Erfindung ist besonders für, Rollstühle oder Krankenfahrstühle geeignet. Besonders bevorzugt wird die Erfindung bei einem Krankenfahrstuhl eingesetzt, wobei ein bevorzugter Krankenfahrstuhl ein einsitziges Fahrzeug ist oder eine Lehrmasse von max. 300kg aufweist oder eine Bauart bedingte Höchstgeschwindigkeit von 15km/h aufweist oder eine max. Breite von 1,10 m aufweist. Die zulässige Gesamtmasse bevorzugter Krankenfahrstühle beträgt 500 kg. Der Antrieb des Fahrzeugs oder des Krankenfahrstuhls erfolgt bevorzugt ausschliesslich durch die elektrische Maschine, wobei ggf. auch ein manueller Antrieb, beispielsweise bei Ausfall der elektrischen Maschine, möglich sein kann. "Ausschliesslich" bezieht sich dabei vorzugsweise auf Maschinen-Antriebe. Die Erfindung bietet deswegen besondere Vorteile bei Rollstühlen oder Krankenfahrstühten, da diese Fahrzeuge üblicherweise eine geringe Baugrösse aufweisen, so dass aufwendige mechanische Konstruktionen für eine komfortable Lagerung der angetriebenen Räder erschwert sind.

Vorzugsweise umfasst der Antrieb ein Getriebe mit fester Untersetzung, über welches die Abtriebswelle mit dem Antriebsübertragungsbereich der Achse in Wirkverbindung steht. Das Getriebe mit fester Untersetzung bietet den Vorteil eines einfachen Aufbaus, wobei zu berücksichtigen ist, dass bei dem Einsatz des Antriebs in den bevorzugten Krankenfahrstühlen ein Getriebe mit fester Untersetzung in Kombination mit der elektrischen Maschine ausreicht, um den gesamten Geschwindigkeitsbereich bis zu Bauart bedingten Höchstgeschwindigkeit des Krankenfahrstuhls abzudecken.

Vorteilhafterweise umfasst der Antrieb eine Zwischenwelle, die räumlich betrachtet zwischen einem Gehäuse der elektrischen Maschine und der Achse angeordnet ist. Über die Zwischenwelle steht vorzugsweise die Abtriebswelle mit dem Antriebsübertragungsbereich in Wirkverbindung. Dabei bedeutet "zwischen", dass zumindest ein Teilbereich der Zwischenwelle zwischen dem Gehäuse und der Achse angeordnet ist, so dass die Zwischenwelle eine Drehmomentübertragung in umgekehrter Richtung wie die Abtriebswelle der elektrischen Maschine, nur parallel versetzt vornimmt. Dabei ist die Zwischenwelle zweckmässiger Weise parallel zu der Abtriebswelle und zu der Achse angeordnet. "Im wesentlichen parallel" bedeutet dabei parallel im Rahmen üblicher Toleranzen, so dass "im wesentlich parallel" bevorzugt auch ersetzbar ist durch "parallel", wie es der Fachmann versteht.

Bei bevorzugter Ausführungsform weist die Achse ein Differenzial auf. Ein Differenzial bietet den Vorteil eines höheren Fahrkomforts. Das Differenzial ist vorzugsweise im wesentlichen mittig der Achse angeordnet. Auf diese Weise wird beidseitig ausreichend Platz für eine komfortable Fahrbedingungen bietende Radaufhängung geschaffen. Bei der bevorzugten Ausführungsform ist der Antriebsübertragungsbereich dem Differenzial zugeordnet. Solche bevorzugten Ausführungsformen können ein Differenzial mit einem aussen liegenden Zahnkranz aufweisen, über welchen das Differenzial angetrieben wird, wobei wiederum das Differenzial ggf. über weitere Wellen die Räder der Achse antreibt. Das Differenzial ist also vorzugsweise Teil der Achse.

Vorteilhafterweise weist die Achse beidseitig einzeln aufgehängte Räder auf. Dies bietet den Vorteil eines erhöhten Fahrkomforts. Die Räder sind vorteilhafterweise jeweils gefedert oder gedämpft aufgehängt. Auf diese Weise wird ein erhöhter Fahrkomfort bei dem angetriebenen Fahrzeug erreicht. Zweckmässigerweise werden die Räder jeweils über Gelenkwellen angetrieben. Dies ermöglicht eine Einzelradaufhängung und den Antrieb der Räder. Die Gelenkwellen verbinden die Räder vorzugsweise mit dem Differenzial. Auf diese Weise wird ein Antrieb der Räder gewährleistet.

### FIGURENBESCHREIBUNG

Bevorzugte Ausführungsformen der Erfindung werden anhand der beigelegten Figuren näher beschrieben, wobei die Figuren zeigen
- Figur 1: eine schematische Schnittansicht eines erfindungsgemässen Antriebs, und
- Figur 2: eine weitere schematische Schnittansicht des Antriebs der Figur 1.

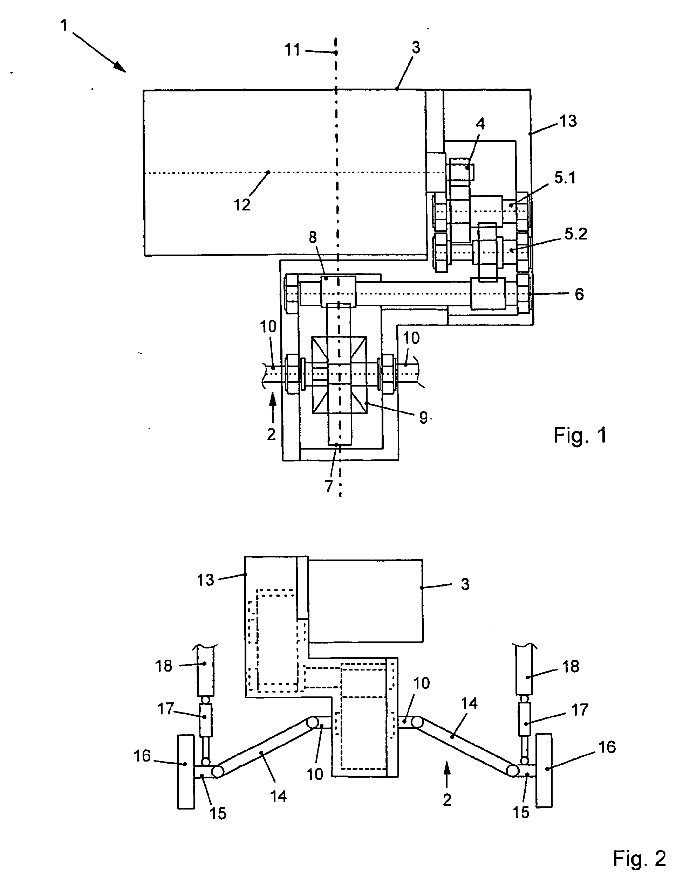

In der Figur 1 ist ein erfindungsgemässer Antrieb 1 schematisch in einer Schnittansicht gezeigt. Anzumerken ist, dass in der Figur 1 ein Teil der Achse 2 des erfindungsgemässen Antriebs 1 nicht gezeigt ist. Der erfindungsgemässe Antrieb 1 umfasst eine elektrische Maschine 3, welche über eine Abtriebswelle 4 auf eine erste Getriebewelle 5.1 wirkt, die wiederum auf eine zweite Getriebewelle 5.2 wirkt. Die zweite Getriebewelle 5.2 steht in Eingriff mit einer Zwischenwelle 6. Die Zwischenwelle 6 überträgt das Drehmoment in einer Richtung parallel zu der Abtriebswelle 4 der elektrischen Maschine 3 in Richtung des Gehäuses der elektrischen Maschine 3. Am Abtriebs-seitigen Ende der Zwischenwelle 6 wird das Drehmoment auf einen Antriebsübertragungsbereich 7 der Achse 2 übertragen. Der Abtriebsübertragungsbereich 7 wird durch einen äusseren Zahnkranz gebildet, der mit einem auf der Zwischenwelle 6 montierten Ritzel 8 in Eingriff ist. Weiterhin ist in der Figur 1 ein durch den Antriebsübertragungsbereich angetriebenes Differenzial 9 schematisch gezeigt, welches beidseitig jeweils Differenzialabtriebswellen 10 antreibt. Die Differenzialabtriebswellen 10 sind Teil der Achse 2.

In der Figur 1 ist auch eine Mittelebene 11 eines Krankenfahrstuhls, welcher durch den Antrieb 1 angetrieben wird, schematisch angedeutet. Der Antriebsübertragungsbereich 7 ist in der Mittelebene 11, d.h., mittig bezüglich der Achse 2 und damit mittig bezüglich des gesamten Krankenfahrstuhls angeordnet. Ausserdem ist ein Schwerpunkt 12 der Baugruppe umfassend die elektrische Maschine 3 und das Getriebe 13 nahe bei der Mittelebene 11 angeordnet. Dies gewährleistet eine gleichmässige Gewichtsverteilung der Masse des Antriebs 1 in dem Krankenfahrstuhl. Die mittige Anordnung des Antriebsübertragungsbereichs 7 gewährleistet, dass beidseitig des Differenzials 9 noch ausreichend Platz ist, um eine mechanisch aufwendige Einzelradaufhängung oder ähnliches anzuordnen.

In der Figur 2 ist der erfindungsgemässe Antrieb 1 der Figur 1 in einer weiteren Schnittansicht, allerdings in entgegengesetzter Blickrichtung, nochmals gezeigt. Für gleiche Teile werden in der Figur 2 gleiche Bezugszeichen wie in der Figur 1 verwendet, wobei in der Darstellung der Figur 2 der Übersichtlichkeit halber einige in der Figur 1 gezeigten Teile oder Bezugszeichen weggelassen wurden. Die Figur 2 dient insbesondere dazu, weitere Elemente der Achse 2 zu zeigen.

Die Achse 2, welche über das Getriebe 13 durch die elektrische Maschine angetrieben wird, umfasst Gelenkwellen 14, welche die Differenzialabtriebswellen 10 mit Radwellen 15 verbinden. Auf den Radwellen 15 sind jeweils Räder 16 montiert. Der Antrieb der Räder 16 über die Gelenkwellen 14 ermöglicht eine Einzelradaufhängung der Räder 16, wobei von der Einzelradaufhängung der Räder 16 in der Figur 2 lediglich schematisch Feder-Dämpfer-Elemente 17 gezeigt sind, über welche die Tragkraft der Räder 16 auf einen Rahmen 18 des Krankfahrstuhls, welcher durch den Antrieb 1 angetrieben wird, übertragen wird. Durch die Einzelradaufhängung der Räder 16 mit den Feder-Dämpfer-Elementen 17 wird ein hoher Fahrkomfort des Krankenfahrstuhls gewährleistet.

**Bezugszeichenliste**

| | | | | | |
|---|---|---|---|---|---|
| 1 | Antrieb | 34 | | 67 | |
| 2 | Achse | 35 | | 68 | |
| 3 | elektrische Maschine | 36 | | 69 | |
| 4 | Abtriebswelle | 37 | | 70 | |
| 5 | Getriebewellen | 38 | | 71 | |
| 6 | Zwischenwelle | 39 | | 72 | |
| 7 | Antriebsübertragungsbereich | 40 | | 73 | |
| 8 | Ritzel | 41 | | 74 | |
| 9 | Differenzial | 42 | | 75 | |
| 10 | Differenzialabtriebswelle | 43 | | 76 | |
| 11 | Mittelebene | 44 | | 77 | |
| 12 | Schwerpunkt | 45 | | 78 | |
| 13 | Getriebe | 46 | | 79 | |
| 14 | Gelenkwellen | 47 | | | |
| 15 | Radwellen | 48 | | | |
| 16 | Räder | 49 | | | |
| 17 | Feder-Dämpfer-Elemente | 50 | | | |
| 18 | Rahmen | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Antrieb (1) für einen Rollstuhl oder einen Krankenfahrstuhl, mit einer elektrischen Maschine (3), die eine Abtriebswelle (4) umfasst, und einer Achse (2), die mit der Abtriebswelle (4) über einen Antriebsübertragungsbereich (7) der Achse (2) in Wirkverbindung steht, wobei die Abtriebswelle (4) der elektrischen Maschine (3) im wesentlichen parallel zu der Achse (2) angeordnet ist,
der Antriebsübertragungsbereich (7) in einer Mittelebene (11), d.. h. mittig bezüglich der Achse (2) angeordnet ist, wobei der Antriebsübertragungsbereich (7) dabei einen Bereich der Achse (2) bezeichnet, in welchem das Antriebsdrehmoment auf die Achse (2) übertragen wird, wobei die Abtriebswelle (4) mit dem Antriebsübertragungsbereich (7) über eine zumindest teilweise zwischen einem Gehäuse der elektrischen Maschine (3) und der Achse (2) angeordneten Zwischenwelle (6) in Wirkverbindung steht, wobei die Achse (2) ein Differenzial (9) aufweist, **dadurch gekennzeichnet, dass** die Achse (2) beidseitig einzeln aufgehängte Räder (16) aufweist, und die Räder (16) jeweils gefedert und/oder gedämpft aufgehängt sind.

2. Antrieb (1) nach Anspruch 1, **dadurch gekennzeichnet, dass** die Abtriebswelle (4) mit dem Antriebsübertragungsbereich (7) über ein Getriebe mit fester Untersetzung in Wirkverbindung steht.

3. Antrieb (1) nach Anspruch 1 oder 2, **dadurch gekennzeichnet, dass** das Differenzial (9) im wesentlichen mittig der Achse (2) angeordnet ist.

4. Antrieb (1) nach Anspruch 3, **dadurch gekennzeichnet, dass** der Antriebsübertragungsbereich (7) dem Differenzial (9) zugeordnet ist.

5. Antrieb (1) nach Anspruch 3 oder 4, **dadurch gekennzeichnet, dass** die Räder (16) jeweils über Gelenkwellen (14) angetrieben werden.

6. Antrieb (1) nach Anspruch 4 oder 5, **dadurch gekennzeichnet, dass** die Räder (16) jeweils über Gelenkwellen (14) mit dem Differenzial (9) verbunden sind.

7. Krankenfahrstuhl mit einem Antrieb (1) nach einem der vorherigen Ansprüche.

## Claims

1. A drive (1) for a wheelchair or a wheelchair, with an electric machine (3) which comprises an output shaft (4), and an axle (2) which is in operative connection with the output shaft (4) via a drive transmission region (7) of the axle (2), the output shaft (4) of the electric machine (3) being arranged substantially parallel to the axle (2),
the drive transmission region (7) is arranged in a centre plane (11), i.e. centrally with respect to the axle (2), the drive transmission region (7) in such case designating a region of the axle (2) in which the drive torque is transmitted to the axle (2), the output shaft (4) being in operative connection with the drive transmission region (7) via an intermediate shaft (6) which is arranged at least partially between a housing of the electric machine (3) and the axle (2), the axle (2) having a differential (9), **characterised in that** the axle (2) has on either side individually suspended wheels (16), and the wheels (16) in each case are suspended in sprung and/or damped manner.

2. A drive (1) according to Claim 1, **characterised in that** the output shaft (4) is in operative connection with the drive transmission region (7) via a gear mechanism with a fixed reduction ratio.

3. A drive (1) according to Claim 1 or 2, **characterised in that** the differential (9) is arranged substantially centrally to the axle (2).

4. A drive (1) according to Claim 3, **characterised in that** the drive transmission region (7) is associated with the differential (9).

5. A drive (1) according to Claim 3 or 4, **characterised in that** the wheels (16) are driven in each case via articulated shafts (14).

6. A drive (1) according to Claim 4 or 5, **characterised in that** the wheels (16) in each case are connected to the differential (9) via articulated shafts (14).

7. A wheelchair with a drive (1) according to one of the preceding claims.

## Revendications

1. Entraînement (1) de chaise roulante ou d'une chaise de transport de malade, avec une machine électrique (3) comportant un arbre de sortie (4), et un axe (2) en connexion de fonctionnement avec l'arbre de sortie (4) sur une zone de transmission d'entraînement (7) de l'axe (2), l'arbre de sortie (4) de la machine électrique (3) étant disposé sensiblement parallèle à l'axe (2),
la zone de transmission d'entraînement (7) étant disposée dans une zone centrale (11), c'est-à-dire au milieu par rapport à l'axe (2), la zone de transmission d'entraînement (7) désignant ici une zone de l'axe (2) dans laquelle le couple d'entraînement est transmise à l'axe (2), l'arbre de sortie (4) étant en connexion de fonctionnement avec la zone de transmission d'entraînement (7) par l'intermédiaire d'un arbre intermédiaire (6) disposé au moins partiellement entre un boîtier de la machine électrique (3) et l'axe (2), l'axe (2) présentant un différentiel (9),
**caractérisé par le fait que** l'axe (2) présente de part et d'autre des roues (16) suspendues individuellement, et que les roues (16) sont, chacune, suspendues à effet de ressort et/ou amorties.

2. Entraînement (1) selon la revendication 1, **caractérisé par le fait que** l'arbre de sortie (4) est en connexion de fonctionnement avec la zone de transmission d'entraînement (7) par l'intermédiaire d'un engrenage à support fixe.

3. Entraînement (1) selon la revendication 1 ou 2, **caractérisé par le fait que** le différentiel (9) est disposé sensiblement au centre de l'axe (2).

4. Entraînement (1) selon la revendication 3, **caractérisé par le fait que** la zone de transmission d'entraînement (7) est associée au différentiel (9).

5. Entraînement (1) selon la revendication 3 ou 4, **caractérisé par le fait que** les roues (16) sont entraînées, chacune, par l'intermédiaire d'arbres à articulation (14).

6. Entraînement (1) selon la revendication 4 ou 5, **caractérisé par le fait que** les roues (16) sont reliées, chacune, par l'intermédiaire d'arbres à articulation (14) au différentiel (9).

7. Chaise de transport de malade avec un entraînement (1) selon l'une des revendications précédentes.
